# EUROPEAN PATENT SPECIFICATION

(11) **EP 3 107 379 B1**
(45) Date of publication and mention of the grant of the patent: **28.03.2018**
(21) Application number: 15714636.6
(22) Date of filing: 17.02.2015
(51) Int. Cl.: A01K 1/00, A01K 1/03, A01K 31/08

(54) **MOUNTABLE AND VENTILATED DOGHOUSE**
MONTIERBARE UND BELÜFTETE HUNDEHÜTTE
NICHE MONTABLE ET VENTILÉE

(30) Priority: 20.02.2014 IT CZ20140004
(43) Date of publication of application: 28.12.2016
(73) Proprietor: Bama S.p.A., 55011 Altopascio (LU) (IT)
(72) Inventor: BAIOCCHI, Renzo, 55015 Montecarlo (LU) (IT)
(74) Representative: Scorza, Federica
(86) International application number: PCT/IB2015/051162
(87) International publication number: WO 2015/125069

(56) References cited:
- GB-A- 719 755
- KR-A- 20120 072 273
- US-A- 920 975
- US-A1- 2009 159 013

## Description

The present invention relates to a mountable and ventilated doghouse.

In particular, the present invention relates to a mountable and ventilated doghouse, of the type comprising simple interlocking elements and equipped with a ventilation system.

As is known, a doghouse is a covered structure in which the dog is protected and can be made of various materials, traditionally wood. At the moment, non-wood materials are commonly used to made a doghouse, such as plastic resins or other polymeric materials which have still a good insulation behavior and are cheaper and lighter than wood. The doghouse is closed as much as possible, to avoid heat loss, except for a front opening where the animal can enter or leave. This opening must be raised from the ground, to prevent the water can enter inside. The roof is almost always made of waterproof material and, as the roof of the houses, is made with sloped sides to prevent snow or rain to gather, since the doghouse is an object intended primarily for use outdoors.

However, despite the front opening, the doghouses that are on the market do allow neither to provide adequate internal ventilation, especially during hot seasons, nor to spill odors left by the dog that lives there.

A known solution to this problem is the patent application KR20120072273 which describes a doghouse having height adjustable roof to prevent the generation of bad smell in the doghouse by ventilating the doghouse. The doghouse having height adjustable roof comprises a roof main body and a house main body. In the roof main body, an adjusting rod is formed. In a groove formed in the main body, the adjusting rod is inserted and is fixed by an adjustment nail. In rainy or cold days, a gap between the roof main body and house main body are blocked in order to prevent rain water or cold wind from entering the gap.

Even if advantageous under many aspects, only the distance between the entire roof and the side walls of this doghouse can be adjusted, and the roof can't be only partially opened in the sense that a portion of the roof is decoupled from the side wall of the doghouse and another portion of the roof is left coupled to the side wall of the doghouse. As a consequence the ventilation of the doghouse can't be regulated and adjusted.

Purpose of the present invention is to provide a mounted and ventilated doghouse, of the type comprising simple interlocking elements and equipped with a ventilation system that can regulate the ventilation of the doghouses, such as to overcome the limitations which still affect those previously described.

According to the present invention, a mountable and ventilated doghouse is provided, as defined in claim 1.

For a better understanding of the present invention a preferred embodiment is now described, purely as nonlimiting example, with reference to the accompanying drawings, in which:
- Figure 1 shows a three dimensional view of a mountable and ventilated doghouse, according to the invention;
- Figure 2 shows a three dimensional exploded view of the mountable and ventilated doghouse, according to the invention;
- Figure 3 shows a three dimensional view of the mountable and ventilated doghouse devoid of a side wall and of the front wall, according to the invention;

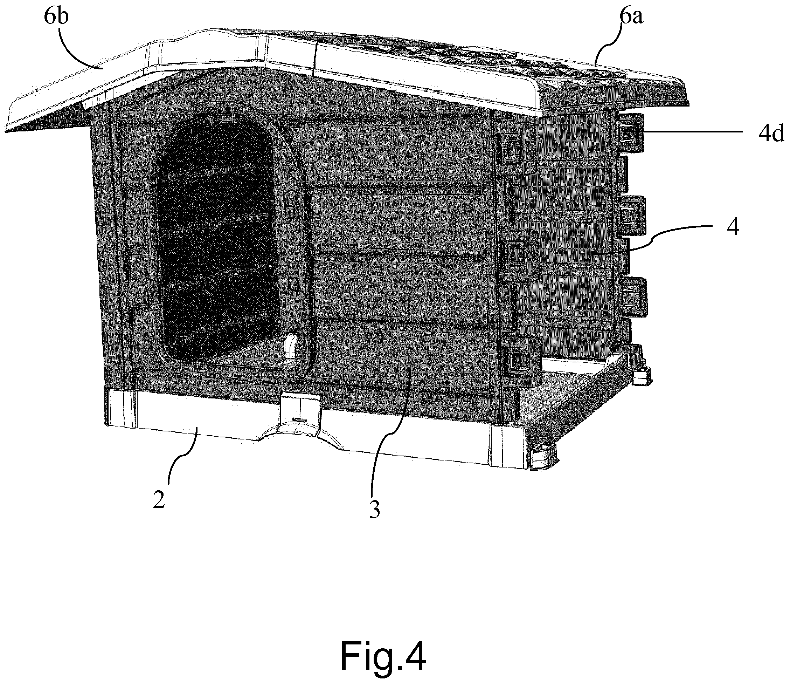

- Figure 4 shows a three dimensional view of the mounted and ventilated doghouse devoid of a side wall, according to the invention;
- Figure 5 shows a three dimensional bottom view of the roof and without a side wall of the mountable and ventilated doghouse, according to the invention;
- Figure 6 shows a three dimensional detailed bottom view of the lateral edge of the roof of the mountable and ventilated doghouse, according to the invention;
- Figure 7 shows a three dimensional view of an handle for opening and closing the roof of the mounted and ventilated doghouse, according to the invention;
- Figure 8 shows a three dimensional detailed internal view of the system for opening and closing the roof of the mountable and ventilated doghouse, according to the invention;
- Figure 9 shows a three dimensional external side view of the handle for opening and closing the roof of the mountable and ventilated doghouse, according to the invention;
- Figure 10 shows a sequence for assembling the mountable and ventilated doghouse, according to the invention.

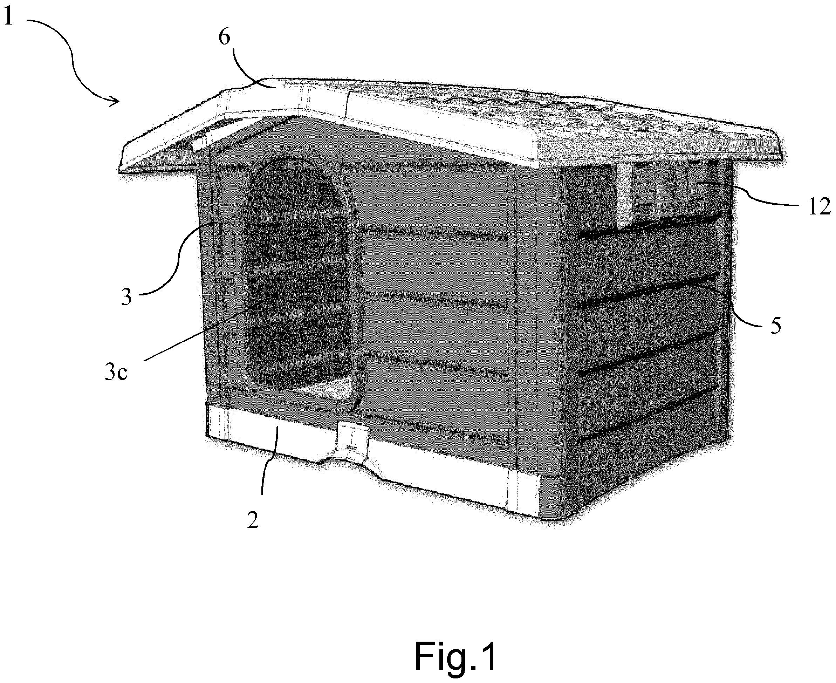

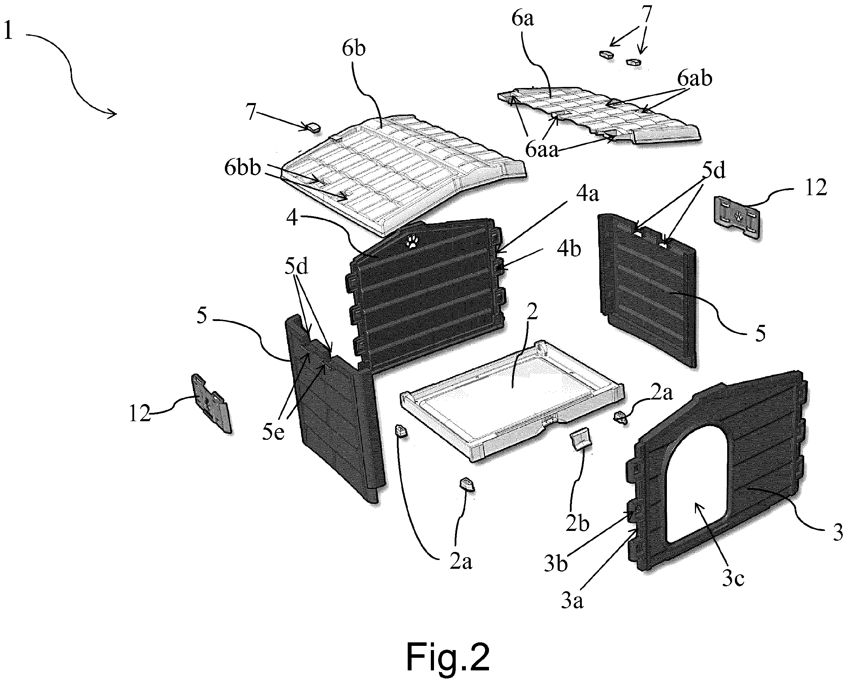

With reference to these figures, a mountable and ventilated doghouse is shown, according to the invention. In Figures 1 and 2 a mountable and ventilated doghouse is shown in its entirety, according to the invention. In details, the mountable and ventilated doghouse 1 of Figure comprises a slidably removable floor base 2 equipped with lower wheels 2a and an handle 2b for blocking / unlocking the sliding of the floor base 2; a front wall 3 with an opening 3c to allow the entrance and the exit of the dog; a rear wall 4; side walls 5; a sloped roof 6 composed of two modular elements 6a and 6b.

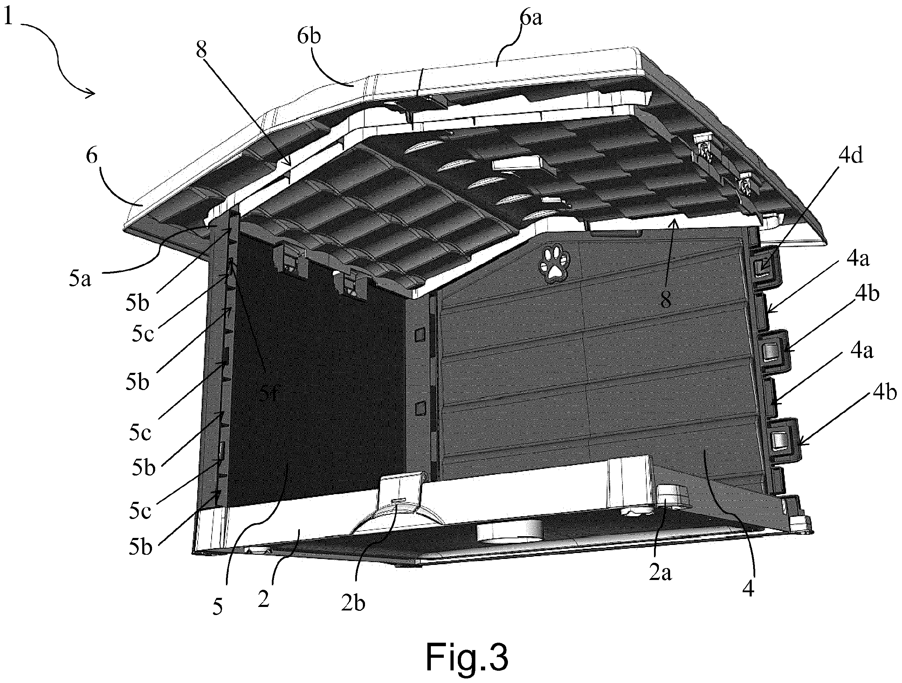

Figure 3 shows the inside of the mountable and ventilated doghouse 1.

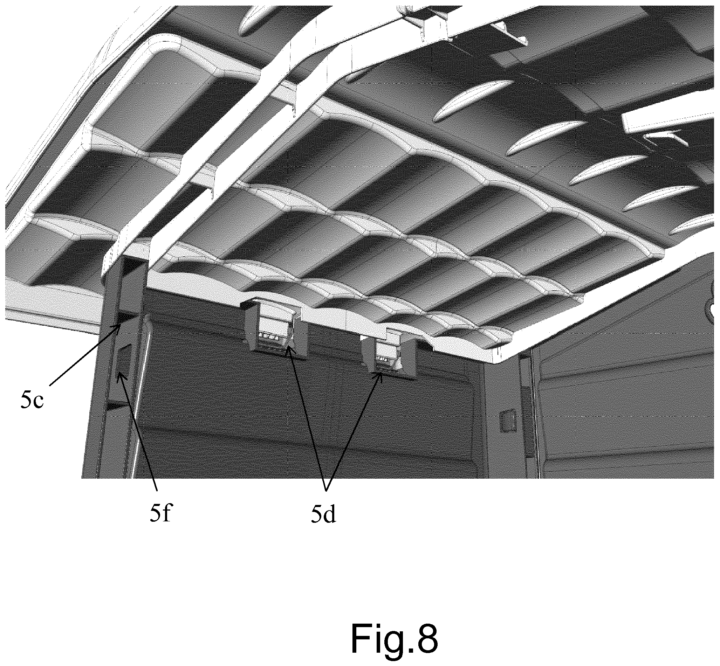

The side walls are of rectangular shape. More in detail, each side wall 5 of the doghouse 1 has, along each vertical profile, an edge 5a having a blunt external profile and internally comprising first housings 5b alternating second housings 5c, dedicated, respectively, to the snap of first protrusions, 3a and 4a, and second protrusions, 3b and 4b, present at the lateral edges of the front wall 3 and rear wall 4. Furthermore, each side wall 5 has, along the upper profile, two indents 5d, better shown in the next figure 8, in correspondence of which, externally there are two gripping elements 5e, for example pins, shown in Figure 2. Basically, each side wall 5 is placed perpendicularly to the front wall 3 and to the rear wall 4 and engaged between them, in such a way that the first protrusions 3a and 4a enter inside the housings 5b of the side walls 5 and that the second protrusions 3b and 4b enter, going to fit, in the housings 5c by means of suitable grooves 5f made inside them, already shown in Figure 3 and even better visible in figure 8. In fact, advantageously according to the invention, the second protrusions 3b and 4b show raised regions 3d and 4d configured to be able to snap inside the grooves 5f.

The sloped roof 6 is formed by combining two modular elements 6a and 6b by the interlocking of suitably excavated regions 6aa, present on one side of the first component element 6a composing the roof 6 which has to be joined to the second component element 6b, within grooves, not shown in figure, present in the edge of the second component element 6b. In addition, the roof 6 comprises four caps 7 able to close gaps 6ab and 6bb comprised in the elements 6a and 6b. Once formed, the roof 6 has inferiorly a front channel 8 and a rear channel 8, inside which, at the corners, the upper ends of the edges 5a of the side walls 5 and the upper edge respectively of the front wall 3 and of the rear wall 4 engage along the entire profile of the channel 8.

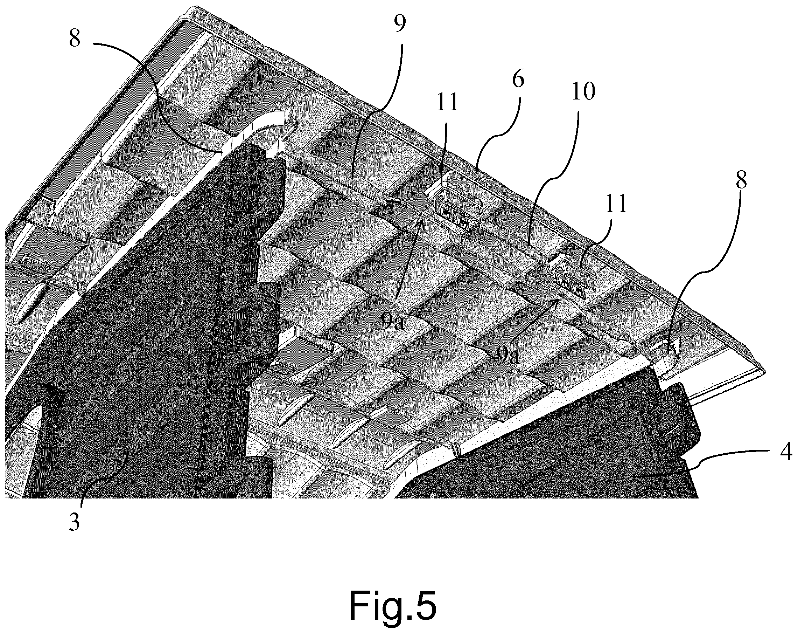

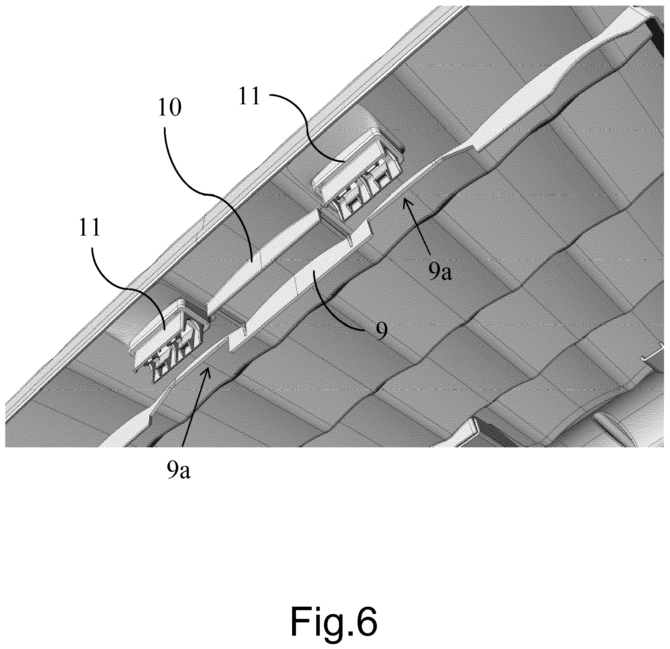

As shown in Figure 5, the roof 6 has at the bottom, in correspondence of each side, a first vertical protrusion 9 that connects the front and rear channels 8, designed in such a way that it comprises two recesses 9a in correspondence of indents 5d, which, advantageously, allow to fold the handles 12, of which will be explained later, during the storage of different doghouses. The roof 6 inferiorly presents a second vertical protrusion 10 which cooperates with the first vertical protrusion 9 for the centering of each side walls 5 between the second vertical protrusion 10 and the first vertical protrusion 9. At the left and right ends of the second vertical protrusion 10, the roof 6 comprises two interlocking closure latch elements 11, best shown in figure 6. More precisely, for interlocking closure latch elements 11 it is intended a system for locking two parts which is based on the deformation of plastic elements specifically designed for a simple use, also by the end users.

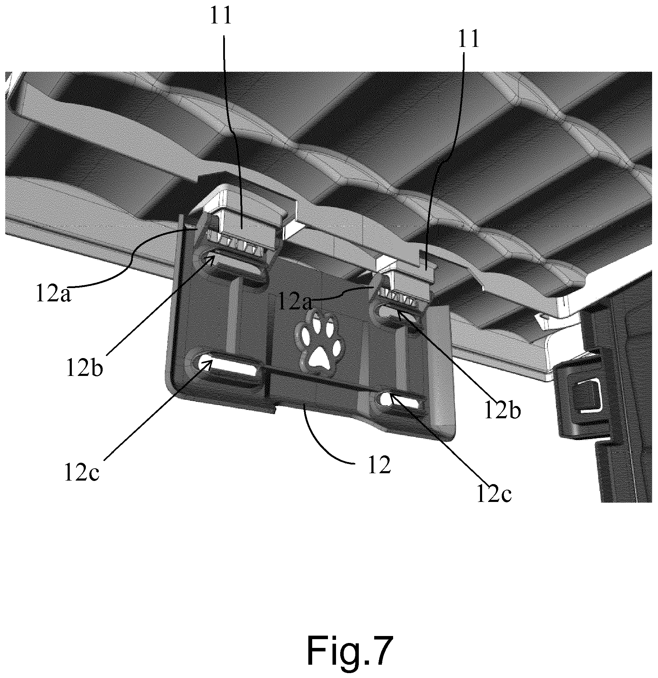

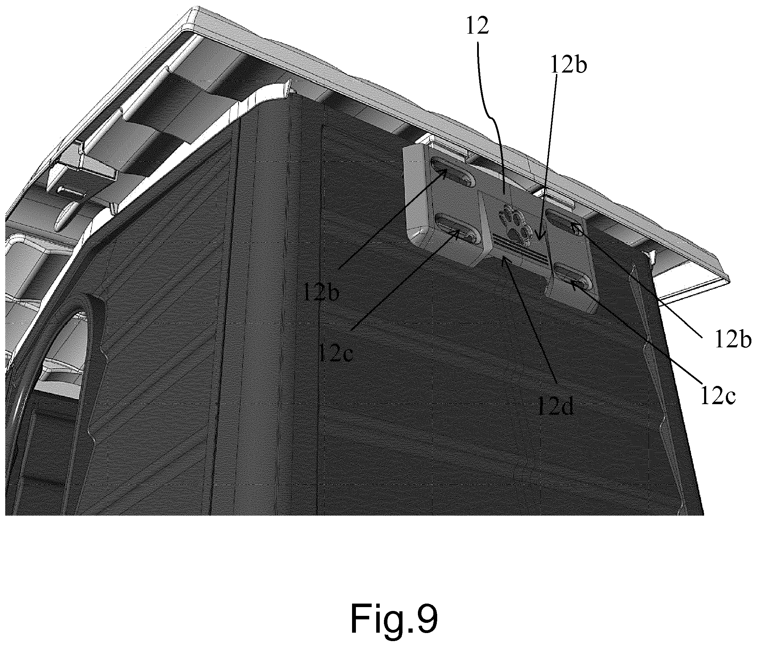

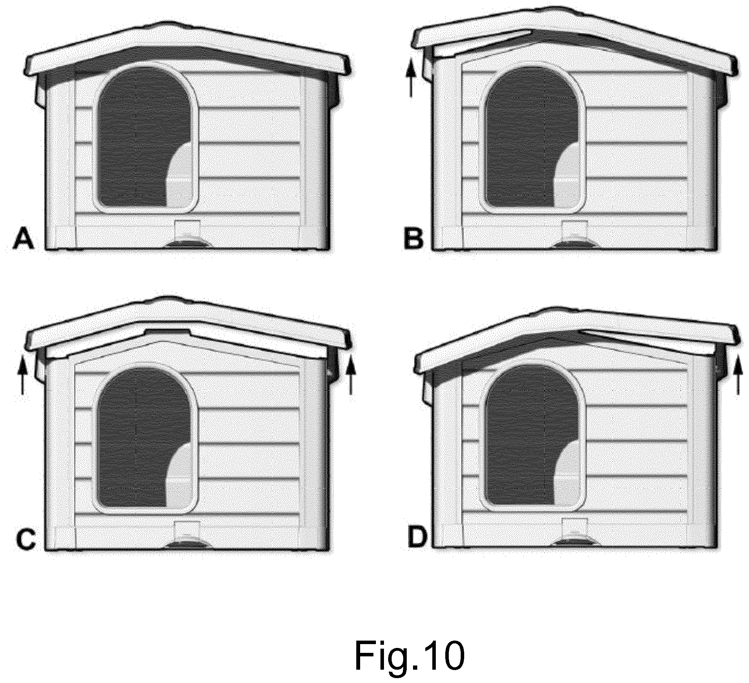

The doghouse 1 also comprises, as shown in figure 7, handles 12 for hooking and unhooking provided in each side wall 5 that allow to lock and unlock the roof 6 on each side, raising it from the side walls 5, so that regions of aeration for doghouse 1 are being formed, as will be better explained hereinafter. More specifically, each handle 12 for hooking and unhooking of the roof 6 is formed by a rectangular element having a size that can able to overlap the area of the two indents 5d of the side walls 5, shown in Figure 8. Figure 7 shows that the handle presents, on the inside of the doghouse, upper cylindrical gripping pins 12a that can be stuck in the interlocking closure latch elements 11. Four lower interlocking latches 12c are realized in the internal face of the handle 12. Within the interlocking latches 12c the pins 5e are able to be interlocked, alternately two by two, in order to lock the roof in the opening position or in the closing position. Furthermore, from the outside, as shown in figure 9, the handle 12 has a raised portion 12d comprised between the lower interlocking latches 12c. Below the raised portion 12d it's possible to insert a hand to grip comfortably and set the opening positions A, B, C, D of the roof of the doghouse 1, as illustrated in figure 10. In particular, the position A of the roof 6 of the doghouse 1 consists in that the roof 6 is completely stuck on the front wall 3 and on the rear wall 4 resting on the side walls 5 and in that the gripping elements 5e are stuck in the upper interlocking latches 12b. Instead, the position B of the roof 6 of the doghouse 1 consists in that the roof 6 has its modular element 6b raised with respect to the side wall 5 being at the left of the opening 2, and to the front wall 3 and rear wall 4, and that the gripping elements 5e of the left side wall 5 are stuck in the lower interlocking latches 12c of the left handle 12. In particular, in the B position, on the left side of the doghouse 1, ventilation internal regions of the doghouse 1 are formed. The position C of the roof 6 of the doghouse 1 consists in that the roof 6 lies with both its modular elements 6b and 6a raised with respect to the side walls 5 and to the front wall 3 and rear wall 4, and in that the gripping elements 5e of both side walls 5 are stuck in the lower interlocking latches 12c of both handles 12. In particular, in the position C, on both left and right sides of the doghouse 1, ventilation internal regions of the doghouse 1 are formed. Finally, the position D of the roof 6 of the doghouse 1 consists in that the roof 6 lies with its modular element 6a raised with respect to the side wall 5 placed at the right of the opening 3, ant to the front wall 3 and the rear wall 4, and in that the gripping elements 5e of the right side wall 5 are stuck in the lower interlocking latches 12c of the right handle 12. In particular, in the position D, from the right side of the doghouse 1, internal ventilation regions of the doghouse 1 are formed.

More in detail, the doghouse 1 provided with the ventilation system can easily be switched from a normal position of use with the only opening 3c through which can enter both the dog and the air to a ventilation position in which the roof is positioned raised with respect to the right side wall or the left side wall and allows the passage of a greater air flow. The normal position consists in positioning the roof 6 in position A by means of the handles 12 and, in particular, with the upper interlocking latches 12b housing inside the gripping elements 5e. Instead, the ventilation position consists in positioning the roof 6 at the position B, C, D by means of the handles 12 and, in particular, with the lower interlocking latches 12c housing inside the gripping elements 5e.

Therefore, the mountable and ventilated doghouse according to the invention allows to considerably enhance the input air flow and of the output air flow.

Another advantage of the mountable and ventilated doghouse according to the invention consists in the fact that it is realized by using a set of components, easily assembled by the end customer, so being less voluminous.

A further advantage of the mountable and ventilated doghouse according to the invention consists in the fact that the floor can be easily extracted to carry out an easy cleaning operation.

Finally, thanks to the compact design of the mountable and ventilated doghouse according to the invention it can be used also at home or indoors.

Finally it is clear that the mountable and ventilated doghouse described and illustrated here can be modified and varied without departing from the protective scope of the present invention, as defined in the appended claims.

## Claims

1. A mountable and ventilated doghouse (1) comprising a floor base (2); a front wall (3) provided with an opening (3c) for the dog's and air flow entry and exit and a rear wall (4); a right side wall (5) placed at the right of the opening (3c) and a left side wall (5) placed at the left of the opening (3c) engaged between said front wall (3) and said rear wall (4); a roof (6); and a ventilation system configured for raising the roof (6) with respect to the front wall (3) and rear wall (4) and to at least one of the right or left side wall (5), said roof (6) moving from a normal use position (A) to at least one ventilation position (B, C, D) enabling the entry and the exit of an air flow greater than the air flow flowing through the opening (3c), **characterized in that** said ventilation system comprises:
- at least two gripping elements (5e) provided on the outer face of each side wall (5) in correspondence of indents (5d) formed along the upper profile of each side wall (5);
- interlocking closure latch elements (11) provided, two by two, under the lateral lower profiles of the roof (6); and
- at least one right hooking / unhooking handle (12) and at least one left hooking / unhooking handle (12), provided in each side wall (5), formed by a rectangular element having an area able to overlap the indents (5d) and comprising, on the upper edge of its inner surface, cylindrical gripping pins (12a) able to be engaged with the interlocking closure latch elements (11), and, on the inner surface immediately below the cylindrical gripping pins (12a), two upper interlocking latches (12b) and two lower interlocking latches (12c), to which the gripping elements (5e) are alternately two by two engageable.

2. A mountable and ventilated doghouse (1) according to claim 1, **characterized in that** the handle (12) presents, on its outer surface, a raised portion (12d) comprised between the lower interlocking latches (12c) and below which the hand of a user is able to be inserted.

3. A mountable and ventilated doghouse (1) according to claim 1, **characterized in that** the roof (6) comprises a first modular element (6a) and a second modular element (6b) able to be interlocked by means of interconnection between suitably excavated regions (6aa) provided on one side of the first modular element (6a) and grooves provided in the edge of the second modular element (6b), the second modular element (6b) being able to be interlocked to the left side wall (5) and the first modular element (6a) being able to be interlocked to the right side wall (5).

4. A mountable and ventilated doghouse (1) according to claim 1, **characterized in that** the front and rear walls (3, 4) are provided, at their lateral edges, first protrusions (3a, 4a) alternating with second protrusions (3b, 4b) having raised regions (3d, 4d).

5. A mountable and ventilated doghouse (1) according to claims 1 and 4, **characterized in that** the side walls (5) are provided, along each vertical profile, with an edge (5a) having a blunt external profile and internally comprising first housings (5b) alternating with second housings (5c), the first housings (5b) being dedicated to snap the first protrusions (3a, 4a) and the second housings (5c) being dedicated to snap the raised regions (3d, 4d) of the second protrusions (3b, 4b) inside grooves (5f) comprised in the second housings (5c).

6. A mountable and ventilated doghouse (1) according to claims 1 and 5, **characterized in that** the roof (6) inferiorly is provided with a front channel (8) and a rear channel (8) inside which, at the corners, upper ends of the edges (5a) of the side walls (5) are able to be fit, and, all along their profile, the upper edge of the front and rear walls (3, 4) are able to be fit, and **in that** the roof (6) is provided at the bottom, at each side, with a first vertical protrusion (9) connecting each other the front and rear channels (8) and comprising two recesses (9a) in correspondence of the indents (5d), and with a second vertical protrusion (10) in advanced position with respect to the first vertical protrusion (9) and cooperating with it for centering of each side wall (5) between the second vertical protrusion (10) and the first vertical protrusion (9).

7. A mountable and ventilated doghouse (1) according to claim 6, **characterized in that** the roof (6) houses the interlocking closure latch elements (11) at the left and right ends of the second vertical protrusion (10).

8. A mountable and ventilated doghouse (1) according to claim 1, **characterized in that** the normal use position (A) is carried out with the roof (6) completely stuck on the front and rear walls (3, 4) and resting on the side walls (5) and with the gripping elements (5e) embedded in the upper interlocking latches (12b).

9. A mountable and ventilated doghouse (1) according to claims 1 and 3, **characterized in that** the ventilation position (B) is carried out with the second modular element (6b) of the roof (6) raised with respect to the left side wall (5) and to the front and rear walls (3, 4) and with the gripping elements (5e) of the left side wall (5) stuck in the lower interlocking latches (12c) of the left handle (12).

10. A mountable and ventilated doghouse (1) according to claims 1 and 3, **characterized in that** the ventilation position (C) is carried out with both the first and the second modular elements (6b, 6a) raised with respect to the side walls (5) and to the front wall and rear (3, 4) and with the gripping elements (5e) of both side walls (5) stuck in the lower interlocking latches (12c) of both right and left handles (12).

11. A mountable and ventilated doghouse (1) according to claims 1 and 3, **characterized in that** the ventilation position (D) is carried out with the first modular element (6a) of the roof (6) raised with respect to the right side wall (5) and to the front and rear walls (3, 4) and with the gripping elements (5e) of the right side wall (5) stuck in the lower interlocking latches (12c) of the right handle (12).

12. A mountable and ventilated doghouse (1) according to any one of the preceding claims, **characterized in that** the floor base (2) is able to slide and to be removed by means of lower wheels (2a) and of a handle (2b) for blocking / unlocking the sliding of the floor base (2).

## Patentansprüche

1. Montierbare und belüftete Hundehütte (1), umfassend eine Bodenplatte (2); eine mit einer Öffnung (3c) für den Eintritt und Austritt des Hundes und von Luftstrom versehene Vorderwand (3) und eine Rückwand (4); eine an der rechten Seite der Öffnung (3c) platzierte rechte Seitenwand (5) und eine an der linken Seite der Öffnung (3c) platzierte linke Seitenwand (5), die zwischen der Vorderwand (3) und der Rückwand (4) im Eingriff sind; ein Dach (6) und ein Belüftungssystem, das dazu ausgelegt ist, das Dach (6) in Bezug auf die Vorderwand (3) und Rückwand (4) und in Richtung wenigstens der rechten oder linken Seitenwand (5) anzuheben, wobei sich das Dach (6) von einer normalen Nutzungsposition (A) in wenigstens eine Belüftungsposition (B, C, D) bewegt, wodurch der Eintritt und der Austritt eines Luftstroms ermöglicht wird, der größer als der durch die Öffnung (3c) strömende Luftstrom ist, **dadurch gekennzeichnet, dass** das Belüftungssystem Folgendes umfasst:
- wenigstens zwei Greifelemente (5e), die auf der Außenfläche jeder Seitenwand (5) an entlang des oberen Profils jeder Seitenwand (5) gebildeten Kerben (5d) vorgesehen sind,
- verriegelnde Verschlussriegelelemente (11), die, in Zweiergruppen, unter den seitlichen unteren Profilen des Daches (6) vorgesehen sind; und
- wenigstens einen rechten Einhak-/Aushakbügel (12) und wenigstens einen linken Einhak-/Aushakbügel (12), die an jeder Seitenwand (5) vorgesehen und durch ein rechteckiges Element gebildet sind, das einen Bereich hat, der dazu in der Lage ist, die Kerben (5d) zu überlappen, und, an der oberen Kante seiner Innenoberfläche, zylindrische Greifstifte (12a), die mit den verriegelnden Verschlussriegelelementen (11) in Eingriff gebracht werden können, und, an der Innenoberfläche unmittelbar unter den zylindrischen Greifstiften (12a), zwei obere Verriegelungsriegel (12b) und zwei untere Verriegelungsriegel (12c), an denen die Greifelemente (5e) abwechselnd in Zweiergruppen in Eingriff gebracht werden können, umfasst.

2. Montierbare und belüftete Hundehütte (1) nach Anspruch 1, **dadurch gekennzeichnet, dass** der Bügel (12), auf seiner Außenoberfläche, einen erhabenen Abschnitt (12d) aufweist, der zwischen den unteren Verriegelungsriegeln (12c) umfasst ist und unter dem die Hand eines Benutzers eingeführt werden kann.

3. Montierbare und belüftete Hundehütte (1) nach Anspruch 1, **dadurch gekennzeichnet, dass** das Dach (6) ein erstes modulares Element (6a) und ein zweites modulares Element (6b) umfasst, die mittels Verbindung zwischen auf geeignete Weise ausgehöhlten Regionen (6aa), die auf einer Seite des ersten modularen Elements (6a) vorgesehen sind, und Nuten, die an der Kante des zweiten modularen Elements (6b) vorgesehen sind, verbunden werden können, wobei das zweite modulare Element (6b) dazu in der Lage ist, mit der linken Seitenwand (5) verbunden zu werden, und das erste modulare Element (6a) dazu in der Lage ist, mit der rechten Seitenwand (5) verbunden zu werden.

4. Montierbare und belüftete Hundehütte (1) nach Anspruch 1, **dadurch gekennzeichnet, dass** die Vorder- und Rückwände (3, 4), an deren seitlichen Kanten, mit ersten Vorsprüngen (3a, 4a) versehen sind, die sich mit zweiten Vorsprüngen (3b, 4b) mit erhabenen Regionen (3d, 4d) abwechseln.

5. Montierbare und belüftete Hundehütte (1) nach Anspruch 1 und 4, **dadurch gekennzeichnet, dass** die Seitenwände (5), entlang jedes vertikalen Profils, mit einer Kante (5a) versehen sind, die ein stumpfes externes Profil hat und intern erste Aufnahmen (5b) umfasst, die sich mit zweiten Aufnahmen (5c) abwechseln, wobei die ersten Aufnahmen (5b) dafür vorgesehen sind, die ersten Vorsprünge (3a, 4a) und die zweiten Aufnahmen (5c) dafür vorgesehen sind, die erhabenen Regionen (3d, 4d) der zweiten Vorsprünge (3b, 4b) in Nuten (5f) einzuschnappen, die in den zweiten Aufnahmen (5c) umfasst sind.

6. Montierbare und belüftete Hundehütte (1) nach Anspruch 1 und 5, **dadurch gekennzeichnet, dass** das Dach (6) an einer niedrigen Stelle mit einem vorderen Kanal (8) und einem hinteren Kanal (8) versehen ist, in denen, an den Ecken, obere Enden der Kanten (5a) der Seitenwände (5) angebracht werden können, und, entlang deren gesamten Profilen, die oberen Kanten der Vorder- und Rückwände (3, 4) angebracht werden können, und dadurch, dass das Dach (6) an der Unterseite, an jeder Seite, mit einem ersten vertikalen Vorsprung (9), der die vorderen und hinteren Kanäle (8) miteinander verbindet und der zwei Aussparungen (9a) an den Kerben (5d) umfasst, und mit einem zweiten vertikalen Vorsprung (10), der sich in Bezug auf den ersten vertikalen Vorsprung (9) in einer vorgerückten Position befindet und mit diesem zum Zentrieren jeder Seitenwand (5) zwischen dem zweiten vertikalen Vorsprung (10) und dem ersten vertikalen Vorsprung (9) zusammenwirkt, versehen ist.

7. Montierbare und belüftete Hundehütte (1) nach Anspruch 6, **dadurch gekennzeichnet, dass** das Dach (6) die verriegelnden Verschlussriegelelemente (11) an den linken und rechten Enden des zweiten vertikalen Vorsprungs (10) aufnimmt.

8. Montierbare und belüftete Hundehütte (1) nach Anspruch 1, **dadurch gekennzeichnet, dass** die normale Nutzungsposition (A) erreicht ist, wenn das Dach (6) vollständig auf den Vorder- und Rückwänden (3, 4) steckt und auf den Seitenwänden (5) aufliegt und wenn die Greifelemente (5e) in die oberen Verriegelungsriegel (12b) eingebracht sind.

9. Montierbare und belüftete Hundehütte (1) nach Anspruch 1 und 3, **dadurch gekennzeichnet, dass** die Belüftungsposition (D) erreicht ist, wenn das zweite modulare Element (6b) des Daches (6) in Bezug auf die linke Seitenwand (5) und in Richtung der Vorder- und Rückwände (3, 4) angehoben ist und wenn die Greifelemente (5e) der linken Seitenwand (5) in den unteren Verriegelungsriegeln (12c) des linken Bügels (12) stecken.

10. Montierbare und belüftete Hundehütte (1) nach Anspruch 1 und 3, **dadurch gekennzeichnet, dass** die Belüftungsposition (C) erreicht ist, wenn sowohl die ersten als auch die zweiten modularen Elemente (6b, 6a) in Bezug auf die Seitenwände (5) und in Richtung der Vorder- und Rückwände (3, 4) angehoben sind und wenn die Greifelemente (5e) von beiden Seitenwänden (5) in den unteren Verriegelungsriegeln (12c) sowohl der rechten als auch der linken Bügel (12) stecken.

11. Montierbare und belüftete Hundehütte (1) nach Anspruch 1 und 3, **dadurch gekennzeichnet, dass** die Belüftungsposition (D) erreicht ist, wenn das erste modulare Element (6a) des Daches (6) in Bezug auf die rechte Seitenwand (5) und in Richtung der Vorder- und Rückwände (3, 4) angehoben ist und wenn die Greifelemente (5e) der rechten Seitenwand (5) in den unteren Verriegelungsriegeln (12c) des rechten Bügels (12) stecken.

12. Montierbare und belüftete Hundehütte (1) nach einem der vorhergehenden Ansprüche, **dadurch gekennzeichnet, dass** die Bodenplatte (2) mittels unterer Räder (2a) und eines Bügels (2b) zum Sperren/Entsperren des Verschiebens der Bodenplatte (2) verschoben und entfernt werden kann.

## Revendications

1. Une niche (1) montable et ventilée comprenant une base plancher (2) ; une paroi avant (3) pourvue d'une ouverture (3c) pour l'entrée et la sortie du chien et du flux d'air, et d'une paroi arrière (4) ; une paroi latérale droite (5) située sur la droite de l'ouverture (3c) et une paroi latérale gauche (5) située sur la gauche de l'ouverture (3c) en prise entre ladite paroi avant (3) et ladite paroi arrière (4) ; un toit (6) ; et un système de ventilation conçu pour soulever le toit (6) par rapport à la paroi avant (3) et à la paroi arrière (4) et à au moins une des parois latérales droite ou gauche (5), ledit toit (6) se déplaçant d'une position d'utilisation normale (A) à au moins une position de ventilation (B, C, D), permettant l'entrée et la sortie d'un flux d'air plus important que celui passant par l'ouverture (3c), **caractérisé en ce que** ledit système de ventilation comprend :
- au moins deux éléments de préhension (5e) disposés sur la face extérieure de chaque paroi latérale (5) en correspondance avec des découpes (5d) formées le long du profil supérieur de chaque paroi latérale (5) ;
- des éléments de blocage par emboîtement (11) disposés deux par deux, sous les profils inférieurs latéraux du toit (6) ; et
- au moins une poignée d'accrochage/décrochage (12) droite et au moins une poignée d'accrochage/décrochage (12) gauche, prévues dans chaque paroi latérale (5), formées par un élément rectangulaire présentant une zone pouvant chevaucher les découpes (5d) et comprenant, sur le bord supérieur de sa surface interne, des broches de préhension cylindriques (12a) pouvant être en prise avec les éléments de blocage par emboîtement (11) et, sur la surface intérieure immédiatement au-dessous des broches de préhension cylindriques (12a), deux loquets de verrouillage supérieurs (12b) et deux loquets de verrouillage inférieurs (12c), avec lesquels les éléments de préhension (5e) peuvent venir en prise deux par deux.

2. Une niche (1) montable et ventilée selon la revendication 1, **caractérisée en ce que** la poignée (12) présente, sur sa surface externe, une partie surélevée (12d) située entre les loquets de verrouillage inférieurs (12c) et sous laquelle l'utilisateur peut introduire une main.

3. Une niche (1) montable et ventilée selon la revendication 1, **caractérisée en ce que** le toit (6) comprend un premier élément modulaire (6a) et un second élément modulaire (6b) pouvant être emboîtés au moyen d'une interconnexion entre des régions excavées adéquatement (6aa) situées sur un côté du premier élément modulaire (6a) et des rainures situées sur le bord du second élément modulaire (6b), le second élément modulaire (6b) pouvant être emboîté sur la paroi latérale gauche (5) et le premier élément modulaire (6a) pouvant être emboîté sur la paroi latérale droite (5).

4. Une niche (1) montable et ventilée selon la revendication 1, **caractérisée en ce que** les parois avant et arrière (3, 4) sont dotées, sur leurs bords latéraux, de premières protubérances (3a, 4a) en alternance avec des secondes protubérances (3b, 4b) dont les régions sont surélevées (3d, 4d)

5. Une niche (1) montable et ventilée selon les revendications 1 et 4, **caractérisée en ce que** les parois latérales (5) sont dotées, le long de chaque profil vertical, d'un bord (5a) avec un profil externe émoussé et comprenant à l'intérieur des premiers boîtiers (5b) en alternance avec des seconds boîtiers (5c), les premiers boîtiers (5b) devant recevoir les premières protubérances (3a, 4a), et les seconds boîtiers (5c) devant recevoir les régions surélevées (3d, 4d) des secondes protubérances (3b, 4b) à l'intérieur des rainures (5f) situées dans les seconds boîtiers (5c).

6. Une niche (1) montable et ventilée selon les revendications 1 et 5, **caractérisée en ce que** le toit (6) est doté sur sa partie inférieure d'un canal avant (8) et d'un canal arrière (8), à l'intérieur desquels, aux angles, les extrémités supérieures des bords (5a) des parois latérales (5) peuvent se loger, et où, tout le long de leur profil, le bord supérieur des parois avant et arrière (3, 4) peut se loger, et **en ce que** le toit (6) est doté sur sa partie inférieure, sur chaque côté, d'une première protubérance verticale (9) reliant les canaux avant et arrière (8) et comprenant deux fraisures (9a) correspondant aux découpes (5d), et d'une seconde protubérance verticale (9) en position avancée par rapport à la première protubérance verticale (9) et coopérant avec celle-ci pour centrer chaque paroi latérale (5) entre la seconde protubérance verticale (10) et la première protubérance verticale (9).

7. Une niche (1) montable et ventilée selon la revendication 6, **caractérisée en ce que** le toit (6) abrite les éléments de blocage par emboîtement (11) sur les extrémités gauche et droite de la seconde protubérance verticale (10).

8. Une niche (1) montable et ventilée selon la revendication 1, **caractérisée en ce que** la position d'utilisation normale (A) est obtenue lorsque le toit (6) est complètement coincé sur les parois avant et arrière (3, 4) et repose sur les parois latérales (5) et lorsque les éléments de préhension (5e) sont engagés dans les loquets de verrouillage supérieurs (12b).

9. Une niche (1) montable et ventilée selon les revendications 1 et 3, **caractérisée en ce que** la position de ventilation (B) est obtenue lorsque le second élément modulaire (6b) du toit (6) est surélevé par rapport à la paroi latérale gauche (5) et aux parois avant et arrière (3, 4), et lorsque les éléments de préhension (5e) de la paroi latérale gauche (5) sont coincés dans les loquets de verrouillage inférieurs (12c) de la poignée gauche (12).

10. Une niche (1) montable et ventilée selon les revendications 1 et 3, **caractérisée en ce que** la position de ventilation (C) est obtenue lorsque le premier et le second élément modulaire (6b, 6a) sont surélevés par rapport aux parois latérales (5) et aux parois avant et arrière (3, 4), et lorsque les éléments de préhension (5e) des deux parois latérales (5) sont coincés dans les loquets de verrouillage inférieurs (12c) des poignées droite et gauche (12).

11. Une niche (1) montable et ventilée selon les revendications 1 et 3, **caractérisée en ce que** la position de ventilation (D) est obtenue lorsque le premier élément modulaire (6a) du toit (6) est surélevé par rapport à la paroi latérale droite (5) et aux parois avant et arrière (3, 4), et lorsque les éléments de préhension (5e) de la paroi latérale droite (5) sont coincés dans les loquets de verrouillage inférieurs (12c) de la poignée droite (12).

12. Une niche (1) montable et ventilée selon l'une quelconque des revendications précédentes, **caractérisée en ce que** la base plancher (2) peut glisser et être déposée à l'aide de roulettes inférieures (2a) et d'une poignée (2b) pour bloquer/débloquer le glissement de la base plancher.
